# EUROPEAN PATENT APPLICATION

(11) **EP 3 065 210 A1**
(43) Date of publication of application: **07.09.2016**
(21) Application number: 15382098.0
(22) Date of filing: 05.03.2015
(51) Int. Cl.: H01M 8/04, A47F 1/08

(54) **MECHANISM FOR HANDLING CAPSULES CONTAINING FUEL FOR FUEL CELLS**

(71) Applicant: Sener Ingenieria Y Sistemas, S.A., 48930 Las Arenas-Bilbao (Vizcaya) (ES)
(72) Inventor: Villarroel Pinedo, Eduardo, 48920 Portugalete - Bilbao (Bizkaia) (ES); Mugarra Aristi, Ane, 48992 Getxo Bilbao (Bizkaia) (ES)
(74) Representative: Carvajal y Urquijo, Isabel

(57) **Abstract**

Mechanism for handling capsules containing fuels for fuel cells, which comprises: a storage box (1) for capsules which houses a circulation undulating rail (2) for the capsules between an inlet port (3) and an outlet port (4); a capsule transporter (6) outside the storage box (1) and which runs between the outlet port (4) and inlet port (3) of the same and has cells for receiving the capsules; a device for inserting capsules in the cells of the transporter; a chamber (5) for extracting the fuel contained in the capsules; and a pusher-extractor device, responsible for displacing, up to the chamber (5), the capsule housed in the cell of the transporter facing said chamber and withdrawing it from the same once it has been used.

## Description

### Field of the invention

The present invention relates to a mechanism for handling capsules containing fuel for fuel cells and more specifically for storing, transporting, inserting and extracting cylindrical capsules of chemical compounds for supplying fuel to fuel cells.

The invention is in particular aimed at covering the need for the flow of capsules in fuel cells for the aeronautical sector.

### Prior art

Fuel cells have had a strong boost thanks to their application in the automotive industry, with the commercializing of the electric car. But from all of the application attributed to fuel cells, the use in aviation seems to be one of the most promising. Companies in the sector all over the world are currently working on exclusive developments for using fuel cells as an alternative to the traditional APU (auxiliary power unit) based on turbo machines, both in commercial airplanes and in UAV (unmanned aerial vehicles).

One of the main reasons for using fuel cells in light aviation is the high output and efficiency of the electric propulsion, compared to that of the turbine-based engines and alternative engines. Another substantial reason is that the fuel cell does not generate contaminant gases.

Hitherto, in some types of cells used in vehicles for refueling, a tank at very high pressure is filled by means of a hose. At present, one line of development is that the fuel is stored and released in capsules at almost atmospheric pressure, therefore requiring an inlet and outlet flow of capsules to a fuel release chamber.

In this sense and within the prior art, US7979974 may be cited as background, which describes a system and method for placing the assemblies and membrane electrodes sequentially within fuel cells, using a system which collects the membranes and separating plates from two storage boxes and transports them by means of a transport belt until placing them in groups in order to complete each one of the cells.

On the other hand, although it is not the field of the present invention, devices for loading and unloading guns (both firearms as well as paintball guns or other types) are well known. In this field, the problem encountered is similar, it provides for the storage of the capsules which may get stuck, the interchangeability of this system for guarantying the continuity of the supply of capsules and the assembly of elements which drive the final extraction of the contents of the capsule. One example of this type of device is described in US7017569B2, which defines a loading and feeding system for paintball guns, in which a random order of the capsules within the store is provided for, which are pushed by a pressure element and thereby forced to exit the loader.

In the same sense, EP0493918B1 may be cited, which describes a system for loading and transporting by means of a transporter belt and an oscillating mechanism for collecting capsules for a howitzer, where the transporter belt is formed by the fastening pieces of the capsules per se, which are closed, which complicates the collection and release of said capsules.

### Description of the invention

The object of the present invention is a mechanism intended for the cyclic feeding of a fuel cell system, proceeding from capsules containing fuel.

The mechanism of the invention comprises: an interchangeable storage box for container capsules, which has an internal rail in the form of a flat coil for the capsules, which runs between an inlet port and an outlet port of the box; a capsule transporter which runs through the exterior of the storage box between the outlet and inlet ports of said box and has receptor cells for the capsules; a device for inserting capsules in the cells of the transporter, arranged between the outlet port of the storage box and the transporter belt; a chamber for extracting fuel contained in the capsules, alignable with a position of the cells of the capsule transporter, being fuel-tight by means of an inflatable seal, and a heating system; and a pusher device responsible for displacing the capsule housed in the cell facing said chamber up to the fuel extraction chamber.

The mechanism of the invention has two different parts, which in combination form a closed circuit.

The first of these parts consists of the box, for example in the form of a prism, for storing and dispensing capsules, having a tubular structure. A mechanism replaces the box when necessary, as a function of the fuel available in the box. Each one of these boxes contains an undulating rail in the form of a flat coil with the geometry suitable for avoiding capsules getting stuck and incorrect installation of the same. The circulation undulating rail is defined by a passage with a transverse section approximately equal to the diametric section of the capsules, the passage of which defines an undulating circuit between the inlet and outlet ports of the storage box. The number of capsules contained in each box may be between 10 and 50. The movement of these capsules is guaranteed since the capsules, already unloaded at the end of the cycle, return to travel the circuit, from its beginning, and avoid the need for constant drive in order to make it circulate. At the end of the circuit, after the last loaded capsule, with the aim of controlling the number of capsules available in the box and automating the changing of the unloaded box for another complete box, each box contains a fixed idle capsule without a load, which the device recognizes as an indicator for the position of the last loaded capsule, and therefore determines the need to change the box. As the unload box is changed for a full box, used capsules will continue to be in the transporter that are inserted into the new box in order to push the full capsules and continue the supply.

The second part of the mechanism consists of the capsule transporter, the device for inserting capsules in the cells of the transporter, the fuel extraction chamber and the pusher-extractor device. This second part is connected to the storage box such that as a unit they form a closed circulation circuit of loaded and unloaded capsules.

The capsule transporter runs between the outlet and inlet ports of the capsule box and consists of one, two or more parallel and coplanar transporter belts that are mounted on a series of rollers and carry battlements from which recipient cells for capsules are determined. The capsule transporter collects the capsules that the capsule insertion device deposits on the transporter and transfers them firstly aligned with the extraction chamber and subsequently to the inlet port of the box, where they are reinserted.

The battlements constitute the fastening elements of the capsules without external drive. The fastening and release of capsules is controlled with the curvature of the rollers on which are mounted the belts and with the fixing position and angle of the battlements to the belt.

The battlements are arranged on the belt or belts in transversal alignments, between two consecutive alignments a cell for receiving a capsule is delimited.

The battlements of each transversal alignment are preferably fixed on the transporter belt or belts by way of points that are slightly out of phase with each other along the belts.

The device for inserting capsules in the cells of the transporter consists of a curved shovel that is arranged between the outlet port of the storage box and the transporter. This shovel is mounted on a shaft that is perpendicular to the direction of displacement of said transporter and is connected to one of the rollers on which the belts are mounted by means of a transmission system and an assembly of levers that define an articulated quadrilateral. All of which to cause the tilting of the shovel between a position for receiving capsules, in which the concave side of the shovel is directed towards the outlet port of the storage box and a discharge position in which the concavity of the shovel is directed towards the cell facing the transporter, while the convexity is directed towards the outlet port of the storage box. In this way, by means of synchronized oscillating movements with the transporter belt, the insertion device introduces the capsules in the belt of the capsule transporter, while avoiding undesired movements of the capsules in the box.

The fuel extraction chamber has a transverse section approximately equal to that of the capsules containing fuel, but not as long as said capsules. This chamber is open at the base adjacent to the transporter belt and closed by the opposing base. The chamber has one inflatable internal peripheral seal, adjacent to the open base and a fuel outlet hole in the closed base. On the internal surface of this closed base is arranged a fuel-tight seal which surrounds the fuel outlet hole. Lastly, the chamber includes a peripheral heating element close to the closed base

According to a possible form of implementation, the fuel extraction chamber consists of two coaxial walls, one internal and another external, between which is arranged the heating element, which can operate by induction, in which case the internal wall is thermally insulating, or by the Joule effect, in which case the internal wall is thermally conductive. In any case, the external wall is mechanically resistant.

The fuel extraction stage may be one-off or may take place a number of times, as a function of the quantity of fuel which needs to be released. The chamber must guarantee the strictest water-tightness in order to avoid fuel leaks. Due to the fact that common fuel-tight seals are worn with the constant friction of the entrance and exit of the capsules, in accordance with the invention, a seal is used which does not rub against the capsules, during their entrance to and exit from the chamber; an inflatable seal can for example be used, operated by means of pneumatic equipment.

In order to move the capsule from the belt to the extractor stage, a clamp is used which is inserted in the latter. The axial movement of this clamp is achieved by means of an actuator. The clamp grips the capsules automatically upon entering into contact with it, it inserts the capsule and maintains it under pressure against the fuel extraction chamber until the capsule is consumed and then the actuator is retracted and releases the capsule when the clamp encounters a stop installed for such purpose, re-depositing the capsule on the transporter.

With regard to the pusher device, it consists of a linear actuator that is arranged in alignment to or parallel with the fuel extraction chamber, close to the capsule transporter, on the opposing side to that occupied by said fuel extraction chamber, with respect to the transporter. This linear actuator carries, at the internal end, a clamp, the closing and opening of which is caused by the effect of its pushing against the capsule, and against fixed stops located at the end of the extraction route.

### Brief description of the drawings

The attached drawings show a non-limiting exemplary embodiment, in which:
- Figure 1 is a diagram that shows the lay-out and functioning of the mechanism of the invention.
- Figure 2 is a lateral elevation of the mechanism unit.
- Figure 3 is a perspective view of the capsule transporter, capsule inserting device, fuel extraction chamber and capsule pusher-extractor device.
- Figure 4 is a partial lateral elevation of the capsule transporter.
- Figure 5 shows a perspective view of the capsule insertion device.
- Figure 6a and 6b show a lateral elevation of limiting positions of the capsule insertion device.
- Figure 7 is a perspective view of the fuel extraction chamber and pusher device.
- Figure 8 shows a diametric section of the fuel extraction chamber with the extractor-pusher device.

### Detailed description of a mode of embodiment

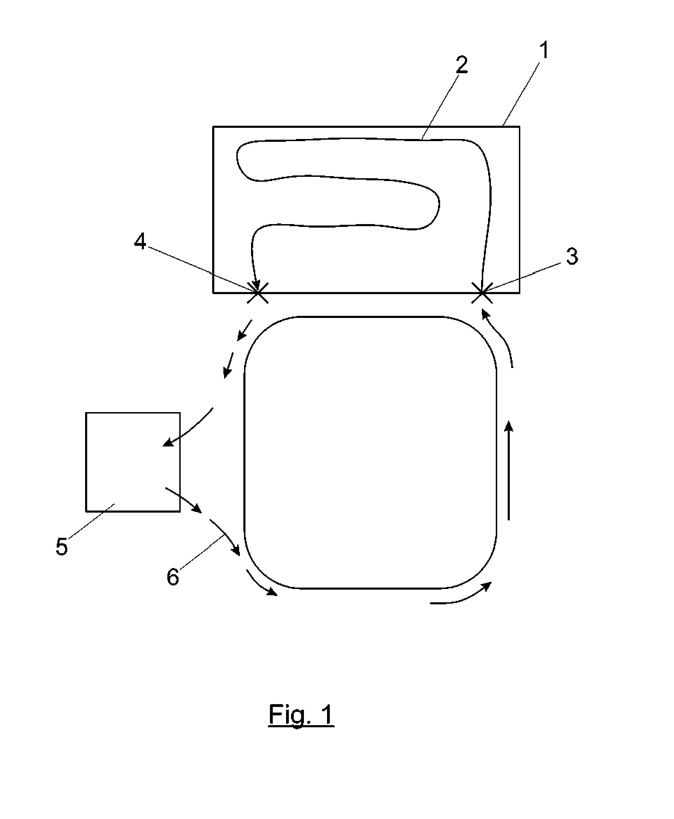

As can be observed in the schematic representation in Figure 1, the machine of the invention consists of an interchangeable box or container (1) of capsules containing fuel, within which is mounted a rail (2), with an undulating trajectory, on which the capsules circulate between an inlet port (3) and an outlet port (4) for capsules.

The machine includes one or more chambers (5), where the release or extraction of the fuel from the container capsules takes place, up to which said capsules are transported by means of a transporter (6) which runs outside the box (1) from the outlet port (4) to the inlet port (3) passing through the chamber (5) where the capsules are introduced and extracted by means of a pusher device, not shown.

Once the capsules are consumed in the chamber (5), the transporter (6) collects them and takes them to the inlet port (3) and introduces them into the box (1), pushing the capsules contained in said box towards the outlet port (4), until all the capsules have been consumed.

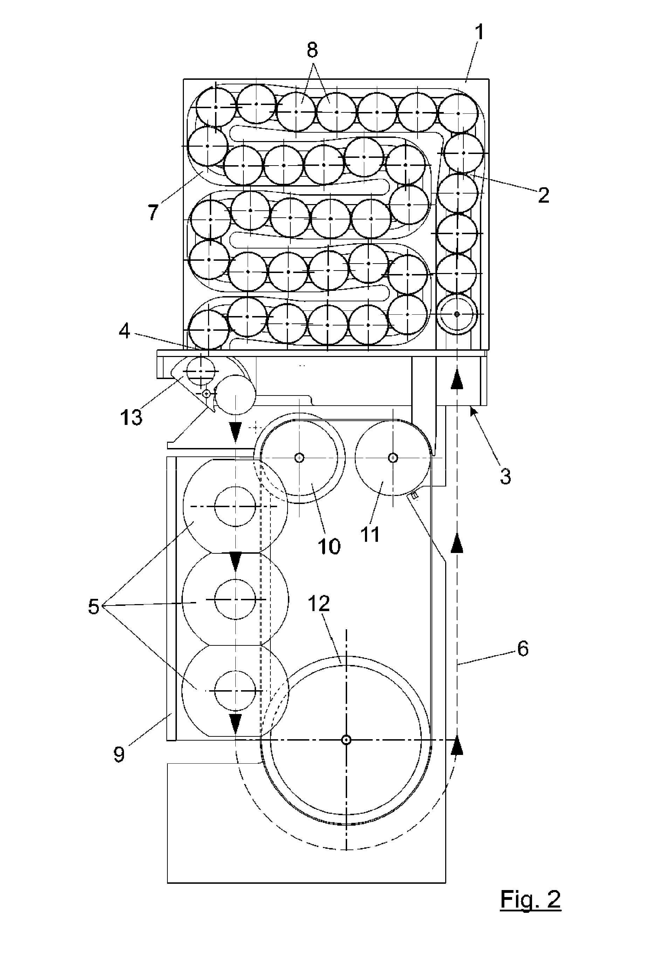

The rail (2), as shown in Figure 2, may adopt the form of an undulating passage (7), between the inlet (3) and outlet (4) ports, with a transverse section approximately equal to the diametric section of the capsules (8), with a preferably cylindrical configuration.

According to the arrangement shown in Figure 2, the box (1) is arranged on the supporting structure (9), in which the capsule transporter (6) is also mounted which runs on rollers (10, 11, and 12). In the same structure, a device (13) for inserting capsules into the cell of the capsule transporter is also mounted, which is arranged between the outlet port (4) of the box (1) and the capsule transporter (6). Also in the structure are mounted the fuel extraction chambers (5) and a pusher-extractor device, not shown, responsible for displacing the capsules from the transporter (6) to the extraction chambers (5) and vice versa.

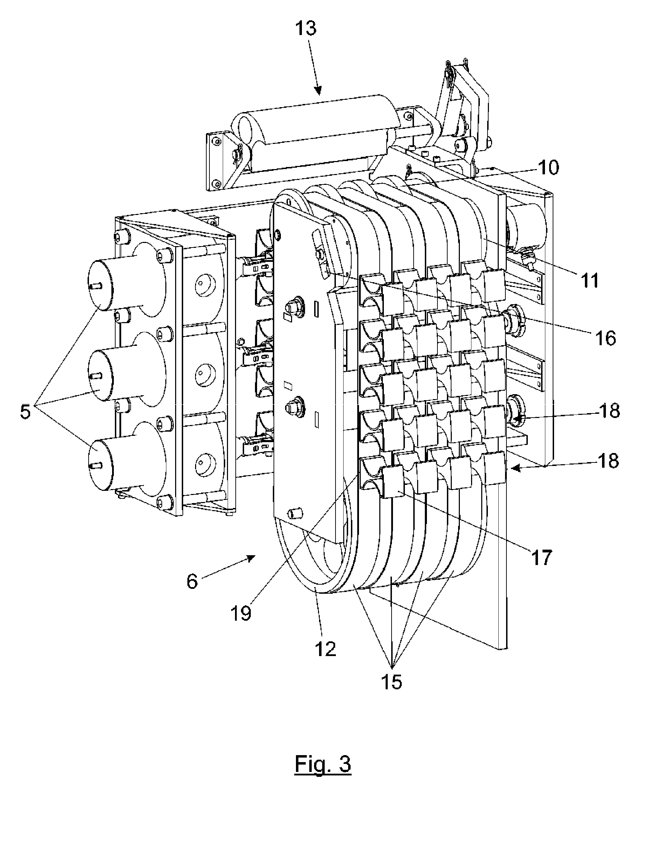

In Figure 3, the device (13) for inserting capsules is shown which is arranged between the outlet (4) of the box (1), Figure 2, and the capsule transporter (6), mounted on the rollers (10, 11 and 12).

As has been mentioned, the force exerted by the unloaded capsules entering the box (1) through the port (3) at the beginning of the circuit forces the loaded capsules (8) to exit the box through the outlet port (4) and avoids the rollback of the interior capsules. Within the box, the circuit has a very specific geometry in order to avoid the cylinders being located in a staggered formation which would automatically cause a clogging and the interruption of the supply. Within each box, a fixed idle capsule is located at the end of the circuit of loaded capsules and slides in the same manner as the capsules used but is fastened to a groove. Monitoring its position, the device effects the change of box as necessary.

The capsule transporter (6) may consist of one, two or more transporter belts (15), four in the example in Figure 3 which are mounted in a parallel and coplanar position on a series of rollers, for example (3), Figures 2 and 3, a drive roller (12) connected to an external drive, a tensor roller (11) which is displaced and allows the dismounting of the belt and absorbs the backlashes of the mounting of the belt and on a drive roller (10) which moves the capsule insertion device (13). The tensor roller (11) is displaceable and its fixing system absorbs elongations since its shaft is inserted into an inclined groove (16) and supported on an elastic element, since in this manner overloads are not transmitted. The angle of this groove (16) has an orientation such that the loads, which the normal functioning of the system can induce, are always perpendicular to the latter and do not cause a displacement in the direction of the groove.

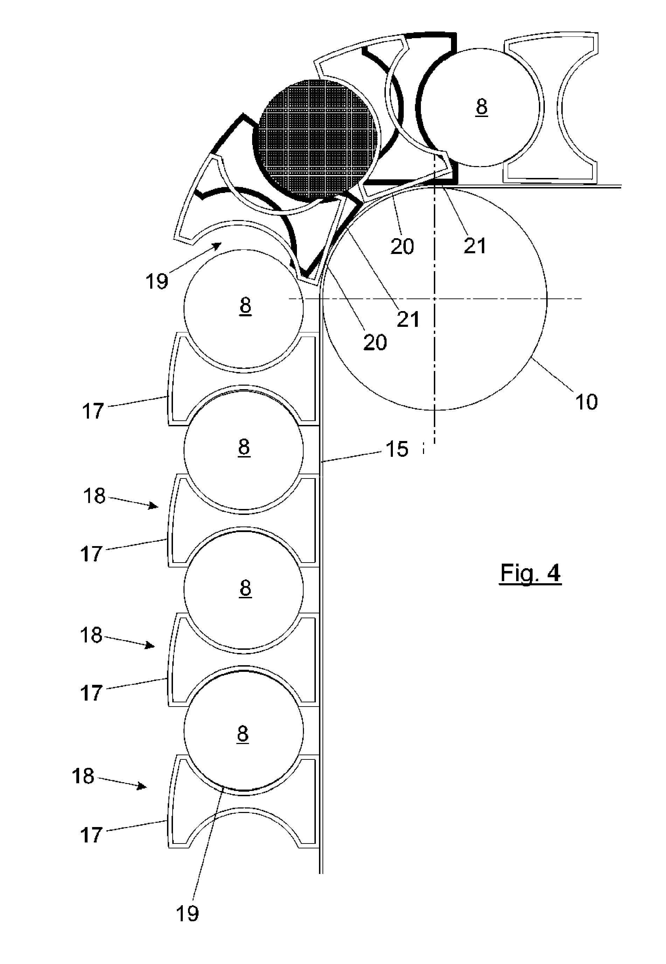

As shown in Figures 3 and 4, the transporter belt or belts (15) carry battlements (17), arranged in transverse alignments (18) between which the cells (19), which receive the capsules (8), are delimited.

The battlements (17) of each alignment (18) of battlements are fixed on the transporter belt or belts (15) by means of points (20, 21...) which are slightly out of phase with each other along the belt.

The battlements (17), positioned along the width of the belt or belts (15) are positioned in a heterogeneous manner in order to guarantee that the capsules (8) have multiple fastening points and are not displaced and also as a function of the fixing point of each battlement to its belt, the clamp effect of the consecutive battlements is going to be controllable by the geometry on which the belt or belts are displaced. Using this configuration of various belts, the mounting and the maintenance work is also facilitated.

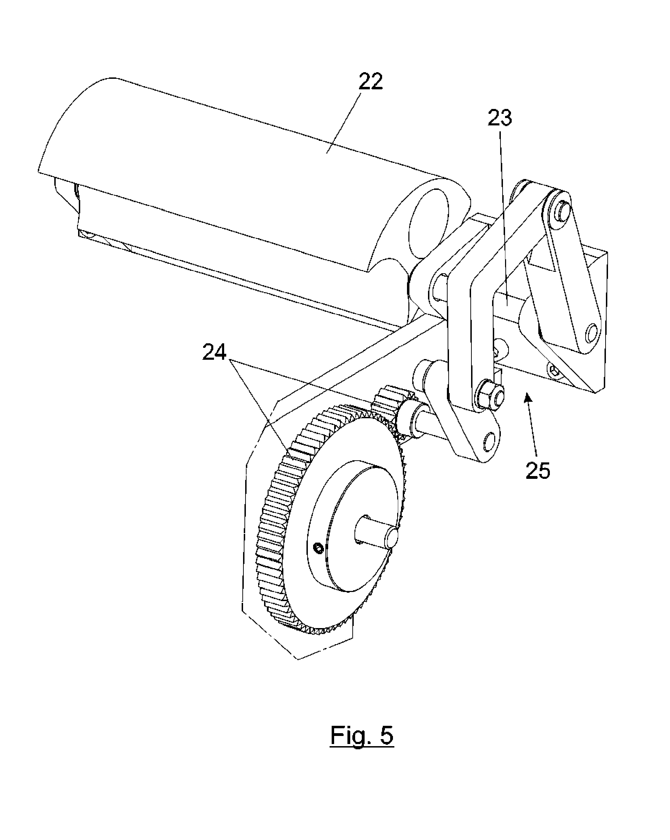

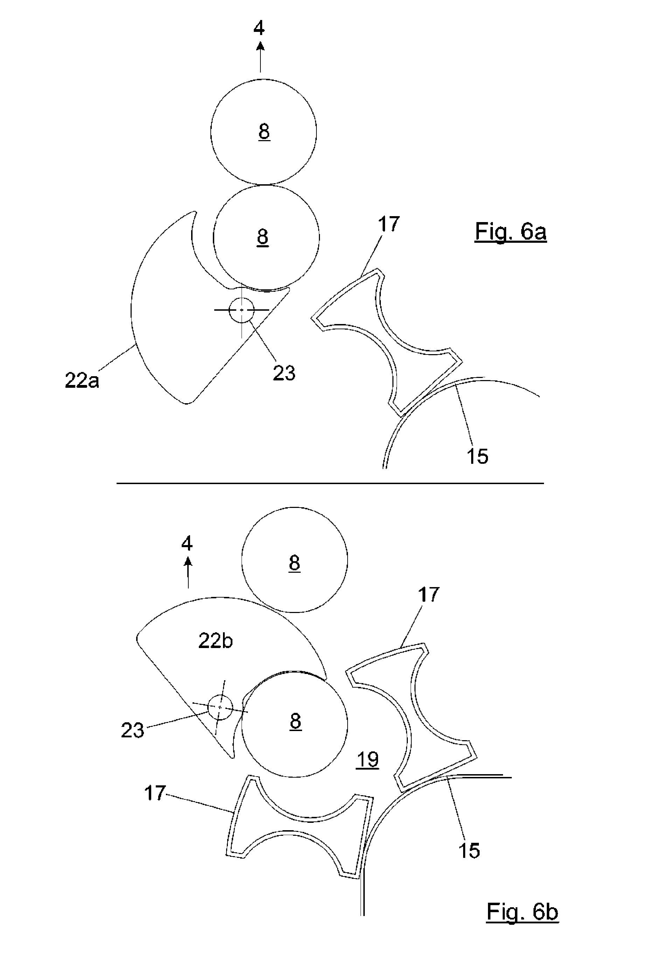

In Figure 5, the device (13) from Figure 3 can be observed in detail, which serves as a way of insertion for the capsules (8) from the outlet (4) of the box (1) to one of the cells (19), delimited between consecutive rows (18) of battlements (17). This device consists of a tilting shovel (22) with a curved profile that is arranged between the outlet port (4) of the box (1) and the transporter (6). The shovel (22) is mounted on a shaft (23) which is perpendicular to the direction of displacement of the transporter (6) and is actuated from the roller (10), Figure 2, of the transporter belts, by means of a transmission system that includes gears (24) and an assembly of levers (25) which delimit an articulated quadrilateral. The tilting of the shovel (22) takes place between a capsule (8) receiving position (22a), Figure 6a, in which the concave side of the shovel is directed towards the outlet port (4) of the box (1) and a discharge position (22b), Figure 6b, in which the concavity of the shovel is directed towards a cell (19) facing the transporter (6) in order to discharge the capsule (8) in said cell and the convexity of the shovel directed towards the outlet port (4) of the box (1) in order to prevent the exit of capsules from said box.

In this way, a specific actuator is not required for this movement and its synchronism with the movement of the transporter (6) is guaranteed. Upon commencing to rotate the transporter, the shovel (22) moves the capsules to the cells between the battlements (17), the geometry of the shovel being conceived so as to support the capsule on all the axes while not supporting the configuration of the battlements.

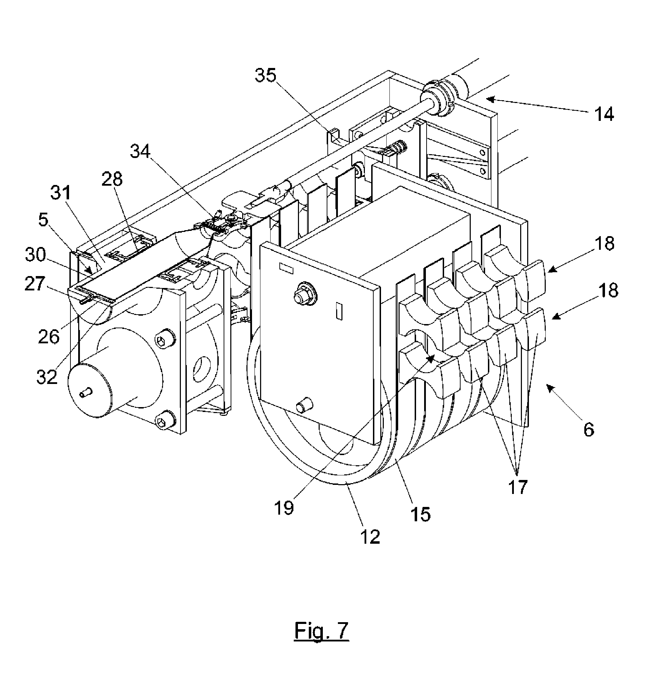

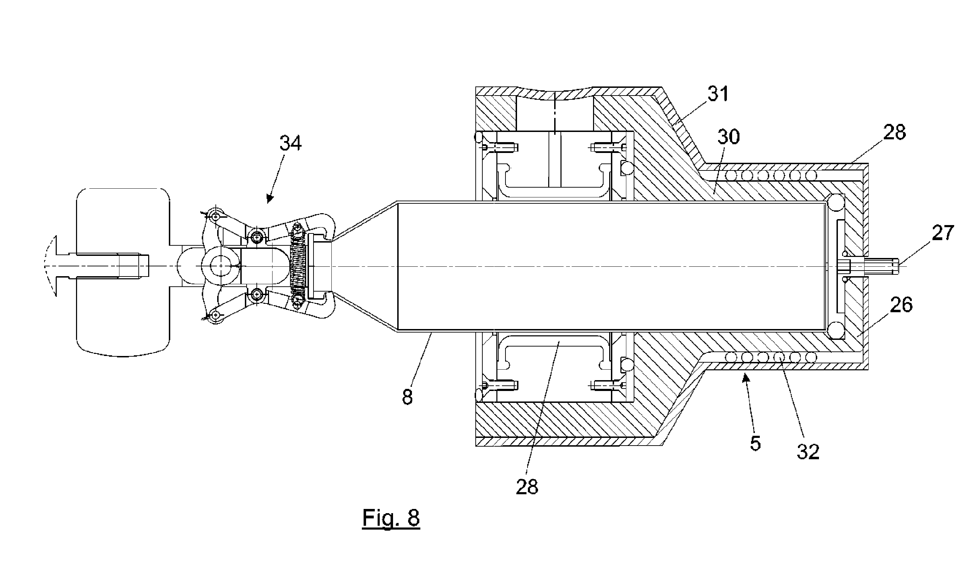

In Figures 7 and 8, a fuel extraction chamber (5) is shown in a perspective view and diametric section, Figure 1. This chamber has a transversal section approximately equal to that of the capsules (8) but not as long, and is closed by one of their bases (26) and open by the opposing base, this open base remaining close to the transporter belt or belts (15). The closed base (26) has a fuel outlet hole (27). In a position adjacent to the open base, the chamber (5) has an inflatable peripheral seal (28) in its interior, while on the closed base, around the outlet hole (27) and also in the interior, it has a fuel-tight seal (28).

The chamber (5) consists of two walls, one internal (30) and another external (31), between which is arranged a heating element (32) which can be actuated by induction, in which case the internal wall (30) is thermally insulated, or by the Joule effect, in which case said internal wall is thermally conductive. Furthermore, the internal wall (30) is fuel-tight. The external wall (31) is in turn mechanically resistant.

In Figure 7, the pusher-extractor device (14) is also shown, which consists of a linear actuator (33), for example at the base of a pneumatic cylinder, which is arranged in alignment with the chamber (5) and is located at the side opposing said chamber with respect to the belt or belts (15) of the transporter (6), close to said transporter. The linear actuator (33) carries, at the end directed towards the chamber (5), a clamp (34), Figure 8, the closing and opening of which is caused by the effect of the pushing which the clamp effects on the capsule (8), upon introducing the capsule into the chamber (5) and on fixed stops (35), Figure 7, located at the end of the extraction route.

When a cell (19) of the transporter (6) is facing the chamber (5), the actuator (14) pushes said capsule up to the chamber and, once emptied, pulls it until it is relocated in the same cell (19).

In the lay-out of the Figures 2 and 3, there are provided three assemblies of chamber, clamp and pneumatic actuator, however, this number of assemblies could vary. The clamps (34) are characterized in that they are axially displaced by their actuator (14) and upon entering into contact with a capsule (8) they automatically hook the capsule. They insert it into the fuel release chamber (5) and maintain it fastened and under pressure while the fuel is released at almost atmospheric pressure. Latter, the clamp (34) pulls it again towards the transporter (6) and automatically releases it when it encounters the stop (35) which actuates the release mechanism installed for this purpose.

The inflatable seal (28) may be controlled by the same pneumatic equipment as its linear actuator (14) and the same order, which causes the actuator to insert the capsule in the chamber, deflates the seal in order to, once again, minimize the controls of the system and the wear of the components. The same occurs conversely, the seal inflating when the actuator is stopped at its maximum elongation. The capsule is introduced in the chamber maintaining a controlled pressure of the actuator in order to prevent its travel back when the fuel is released at a pressure greater than atmospheric pressure. The capsule remains under pressure on the fuel-tight seal (29) and at this time the inflatable seal is inflated in order to guarantee that the method is fuel-tight. The capsule is then heated and the fuel is released which is extracted through the outlet hole (27).

During the entire process, the actuator (14) maintains the pressure on the capsule and does not release it until, when it is emptied, the actuator is retracted and reaches a stop (35) on its linear displacement.

The capsule returns to be collected by the cell (19) of the transporter which introduces it through the port (3) of the box (1), for example by means of a series of non-return ramps or combs which do not allow the capsules used to return backwards.

In the present invention, the geometry of the capsule insertion device (13) is in particular conceived to avoid more than one capsule exiting the box and so that the capsule being moved is also unable to be displaced, considering possible accelerations in the different shafts.

In EP0493918B1, the equivalent mechanism does not have a special design which fulfils the functions previously mentioned. Furthermore, in said patent, the transporter belt is formed by the very fastening pieces of the capsules, which are also not the type of clamp as described in the present invention.

In terms of US 7979974, in addition to not having the same function as the present invention, this involves a considerable improvement since it provides for a configuration of the storage box by means of which clogging is avoided, detecting a lack of supply of capsules and being able to supply these without including any type of actuator in the box. Furthermore in the present invention, the transporter belt or belts (15) have battlements which act as clamps and are controlled by the geometry through which the belt moves, which prevents the capsules being displaced, still having accelerations in any of the shafts, different to what happens in the functioning of US 7979974

Modifications may be introduced to the assembly described without going outside the scope of the invention. For example, the box (1) may be replaced by any system for feeding capsules to the transporter.

## Claims

1. A mechanism for handling capsules containing fuel for fuel cells, **characterized in that** it comprises:
- An interchangeable storage box (1) for capsules (8) containing fuel, which houses a circulation undulating rail (2) for the capsules which runs between an inlet port (3) and an outlet port (4) for capsules;
- A capsule transporter (6) which runs through the exterior of the storage box between the outlet (4) and inlet (3) ports of said box and has cells (19) for receiving the capsules;
- A device (13) for inserting capsules in the cells (19) of the transporter, arranged between the outlet port of the storage box and the capsule transporter;
- A chamber (5) for extracting the fuel contained in the capsules, arranged in alignment with a position of the cells of the capsule transporter; and
- A pusher-extractor device (14), responsible for displacing, up to the fuel extraction chamber (5), the capsule housed in the cells facing said chamber and withdrawing it from said chamber once it has been used.

2. The mechanism according to Claim 1, **characterized in that** the circulation undulating rail (2) of the storage box is defined by a passage with a traversal section approximately equal to the diametric section of the capsules, the passage of which defines an undulating circuit between the inlet (3) and outlet (4) ports of the storage box.

3. The mechanism according to Claim 1, **characterized in that** the capsule transporter (6) consists of at least one transporter belt (15), which is mounted on a series of rollers (10, 11 and 12) and carries battlements (17) between which cells (19) for receiving capsules (8) are delimited.

4. The mechanism according to Claim 3, **characterized in that** the capsule transporter (6) consists of at least two parallel and coplanar transporter belts (15) which are mounted on a series of rollers (10, 11 and 12) and carry battlements (17) between which cells for receiving capsules are delimited.

5. The mechanism according to Claim 3 or 4, **characterized in that** the battlements (17) are arranged on the belts (15) in transverse alignments (18) between two of the consecutive alignments thereof a cell (19) for receiving a capsule (8) is delimited.

6. The mechanism according to Claim 3 or 4, **characterized in that** one of the rollers on which the transporter belts are arranged is mounted by way of its shaft between parallel grooves (16) which are inclined at an angle with an orientation such that the loads induced by the functioning of the system are always perpendicular to said grooves.

7. The mechanism according to Claim 5, **characterized in that** the battlements (17) of each transverse alignment (18) are fixed on the transporter belt or belts by way of points (20-21) which are slightly out of phase with each other along the belts.

8. The mechanism according to Claim 1, **characterized in that** the capsule insertion device (13) consists of a shovel (22) with a curved profile which is arranged between the outlet port (4) of the storage box and the transporter (6), the shovel of which is mounted on a shaft (23) perpendicular to the direction of displacement of said transporter and connected to one of the rollers on which the belts are mounted, by means of a transmission system which includes gears (24) and an assembly (25) of levers which define an articulated quadrilateral in order to cause the tilting thereof between a position (22a) for receiving capsules in which the concave side of the shovel is directed towards the outlet port of the storage box and a discharge position (22b) in which the concavity of the shovel is directed towards a cell facing the transporter and the convexity towards the outlet port of the container box.

9. The mechanism according to Claim 1, **characterized in that** the fuel extraction chamber (5) has a transverse section approximately equal to that of the capsules (8) containing fuel and a shorter length than said capsules, it is open at the base adjacent to the transporter belt and closed at the opposing base (26) and has an inflatable internal peripheral seal (28), adjacent to the open base, a fuel outlet hole (27) in the closed base, a fuel-tight seal (29) arranged on the internal surface of the closed base, circumventing the fuel outlet hole and a peripheral heating element (32) close to the closed base (26).

10. The mechanism according to Claim 9, **characterized in that** the fuel extraction chamber (5) consists of a mechanically resistant external wall (31) and a fuel-tight internal wall (30) between which walls there is arranged the heating element (32).

11. The mechanism according to Claim 10, **characterized in that** the internal wall (30) is thermally insulating and the heating means (32) operates by induction.

12. The mechanism according to Claim 10, **characterized in that** the internal wall (30) is thermally conductive and the heating means (32) operates by the Joule effect.

13. The mechanism according to Claim 1, **characterized in that** the pusher-extractor device (14) consists of a linear actuator (33) which is arranged close to the capsule transporter and carries, at the internal end, a clamp (34) the closing and opening of which is caused by the effect of its pushing against the capsule and against fixed supports (35) located at the end of the extraction route.

14. The mechanism according to Claim 13, **characterized in that** the linear actuator (33) is arranged in alignment with the fuel extraction chamber (5).

15. The mechanism according to Claim 13, **characterized in that** the linear actuator (33) is arranged parallel to the fuel extraction chamber (5).
